(19) Europäisches Patentamt
European Patent Office
Office européen des brevets

(11) Veröffentlichungsnummer: **0 545 152 A1**

(12) **EUROPÄISCHE PATENTANMELDUNG**

(21) Anmeldenummer: **92119692.9**

(51) Int. Cl.5: **C08F 10/00**, C08F 4/622

(22) Anmeldetag: **19.11.92**

(30) Priorität: **29.11.91 DE 4139262**

(43) Veröffentlichungstag der Anmeldung:
**09.06.93 Patentblatt 93/23**

(84) Benannte Vertragsstaaten:
**BE DE ES FR GB NL**

(71) Anmelder: **BASF Aktiengesellschaft**
**Carl-Bosch-Strasse 38**
**W-6700 Ludwigshafen(DE)**

(72) Erfinder: **Rieger, Bernhard, Dr.**
**Bundackerweg 1**
**W-7401 Nehren(DE)**
Erfinder: **Janiak, Christoph, Dr.**
**Ahornstrasse 27**
**W-1000 Berlin 41(DE)**

(54) **Geträgerte Katalysatorsysteme zur Polymerisation von C2-bis C10-Alkenen.**

(57) Katalysatorsysteme zur Polymerisation von $C_2$- bis $C_{10}$-Alkenen, erhältlich durch
a) Zugabe einer oligomeren Aluminiumoxidverbindung zu einem feinteiligen Träger,
b) anschließende Zugabe einer Komplexverbindung von Metallen der IV. und V. Nebengruppe des Periodensystemszu dem nach Stufe a) erhaltenen Produkt
und
c) anschließende Zugabe einer oligomeren Aluminiumoxidverbindungzu dem nach Stufe b) erhaltenen Produkt.

EP 0 545 152 A1

Die vorliegende Erfindung betrifft Katalysatorsysteme zur Polymerisation von $C_2$- bis $C_{10}$-Alkenen, erhältlich durch

a) Zugabe einer oligomeren Aluminiumoxidverbindung zu einem feinteiligen Träger,

b) anschließende Zugabe einer Komplexverbindung von Metallen der IV. und V. Nebengruppe des Periodensystems zu dem nach Stufe a) erhaltenen Produkt

und

c) anschließende Zugabe einer oligomeren Aluminiumoxidverbindungzu dem nach Stufe b) erhaltenen Produkt.

Weiterhin betrifft die Erfindung Verfahren zur Herstellung derartiger Katalysatorsysteme, deren Verwendung zur Herstellung von Polyalkenen, Verfahren zur Herstellung von Polyalkenen mit Hilfe dieser Katalysatorsysteme sowie die hierbei erhältlichen Polyalkene.

Für die Polymerisation von Alkenen können neben den unlöslichen Ziegler-Natta-Katalysatoren auch lösliche Katalysatorsysteme verwendet werden. Bei letzteren handelt es sich um Komplexverbindungen von Metallen der IV. und V. Nebengruppe des Periodensystems mit organischen Liganden, die in Verbindung mit oligomeren Aluminiumverbindungen eingesetzt werden (EP-A 185 918, EP-A 283 739 und GB-A 2 207 136). Die bei diesen Katalysatorsystemen verwendeten Komplexverbindungen enthalten als organische Liganden meist Cyclopentadienylgruppen, die mit dem Übergangsmetall $\pi$-Bindungen eingehen. Häufig werden als Katalysatoren auch solche Übergangsmetallkomplexe verwendet, die neben organischen Liganden noch an das Metallatom gebundene Halogene aufweisen.

Diese löslichen Katalysatorsysteme ergeben jedoch Polymerisate mit einer schlechten Morphologie. Zur Verbesserung der Morphologie werden beispielsweise in der EP-A 294 942, der EP-A 295 312, der EP-A 279 863 und der EP-A 285 443 geträgerte Katalysatorsysteme beschrieben, die Komplexverbindungen von Metallen der IV. und V. Nebengruppe des Periodensystems und oligomere Alumoxanverbindungen enthalten. Diese Katalysatorsysteme weisen jedoch eine niedrige Produktivität auf.

Aufgabe der vorliegenden Erfindung war es daher, ein geträgertes Katalysatorsystem zur Verfügung zu stellen, welches die genannten Nachteile nicht aufweist.

Demgemäß wurden die eingangs definierten Katalysatorsysteme zur Polymerisation von $C_2$- bis $C_{10}$-Alkenen gefunden.

Außerdem wurden Verfahren zur Herstellung derartiger Katalysatorsysteme, deren Verwendung zur Herstellung von Polyalkenen, Verfahren zur Herstellung von Polyalkenen mit Hilfe dieser Katalysatorsysteme sowie die hierbei erhältlichen Polyalkene gefunden.

Der in der Stufe a) eingesetzte feinteilige Träger weist bevorzugt einen Teilchendurchmesser im Bereich von 1 bis 200 $\mu$m auf, insbesondere von 30 bis 70 $\mu$m. Geeignete Trägermaterialien sind beispielsweise Kieselgele, bevorzugt solche der Formel $SiO_2 \cdot a\ Al_2O_3$, worin a für eine Zahl im Bereich von 0 bis 2 steht, vorzugsweise 0 bis 0,5; dies sind also Alumosilikate oder Siliciumdioxid. Derartige Produkte sind im Handel erhältlich, z.B. Silica Gel 332 der Fa. Grace.

Zur Herstellung der erfindungsgemäßen Katalysatorsysteme werden in der Stufe b) eine oder mehrere Komplexverbindungen von Metallen der IV. und V. Nebengruppe des Periodensystems, insbesondere von Titan, Zirkonium, Hafnium, Vanadium, Niob oder Tantal eingesetzt. Vorzugsweise werden dabei solche Komplexverbindungen verwendet, bei denen das Metallatom über $\pi$-Bindungen mit ungesättigten cyclischen Kohlenwasserstoffresten verbunden ist, beispielsweise Cyclopentadienyl-, Fluorenyl- oder Indenylgruppen. Weiterhin sind die bevorzugt eingesetzten Komplexverbindungen dadurch gekennzeichnet, daß das Metallatom noch mit weiteren Liganden, insbesondere mit Fluor, Chlor, Brom und Iod oder einem $C_1$- bis $C_{10}$-Alkyl, beispielsweise einer Methyl-, Ethyl-, Propyl- oder Butylgruppe, verknüpft sein kann. Besonders geeignete Komplexverbindungen enthalten dabei insbesondere Chlor.

Besonders geeignete Komplexverbindungen lassen sich durch folgende allgemeine Formel I kennzeichnen:

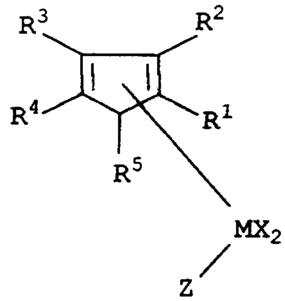

I

in der die Substituenten folgende Bedeutung haben:

M Titan, Zirkonium, Hafnium, Vanadium, Niob oder Tantal,

X Fluor, Chlor, Brom, Iod, Wasserstoff, $C_1$- bis $C_{10}$-Alkyl, $C_6$- bis $C_{15}$-Aryl oder -$OR^6$,

wobei

$R^6$ $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,

$R^1$ bis $R^5$ Wasserstoff, $C_1$- bis $C_{10}$-Alkyl, 5- bis 7-gliedriges Cycloalkyl, das seinerseits ein $C_1$- bis $C_6$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^7)_3$ mit

$R^7$ $C_1$- bis $C_{10}$-Alkyl, $C_6$- bis $C_{15}$-Aryl oder $C_3$- bis $C_{10}$-Cycloalkyl,

Z für X oder

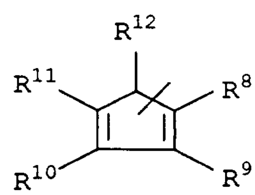

steht,

wobei die Reste $R^8$ bis $R^{12}$ Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 15 C-Atome aufweisende cyclische Gruppen stehen können, oder $Si(R^{13})_3$ mit

$R^{13}$ $C_1$- bis $C_{10}$-Alkyl, $C_6$- bis $C_{15}$-Aryl oder $C_3$- bis $C_{10}$-Cycloalkyl,

oder wobei die Reste $R^4$ und Z gemeinsam eine Gruppierung $-[Y(R^{14})_2]_n-E-$ bilden, in der

Y für Silicium, Germanium, Zinn oder Kohlenstoff steht,

$R^{14}$ für $C_1$- bis $C_{10}$-Alkyl, $C_3$- bis $C_{10}$-Cycloalkyl oder $C_6$- bis $C_{10}$-Aryl

n für die Zahlen 1, 2, 3 oder 4

E für

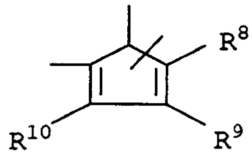

oder A steht, wobei

A -O-, -S-, $>NR^{15}$

oder $>PR^{15}$ bedeutet,

mit

$R^{15}$ $C_1$- bis $C_{10}$-Alkyl, $C_6$- bis $C_{15}$-Aryl, $C_3$- bis $C_{10}$-Cycloalkyl, Alkylaryl oder $Si(R^{16})_3$

mit

$R^{16}$ $C_1$- bis $C_{10}$-Alkyl, $C_6$- bis $C_{15}$-Aryl, $C_3$- bis $C_{10}$-Cycloalkyl oder Alkylaryl.

Von den Metallocenkomplexen der allgemeinen Formel I sind

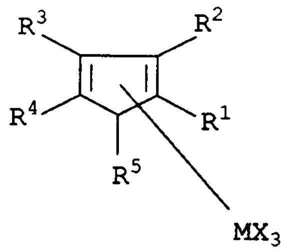

Ia,

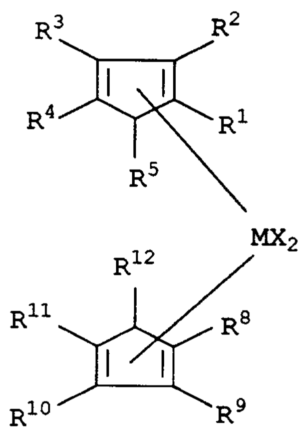

Ib,

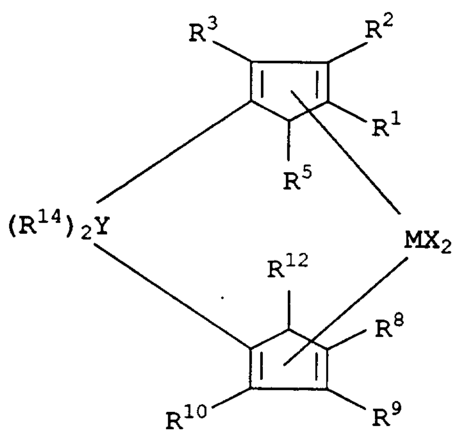

Ic und

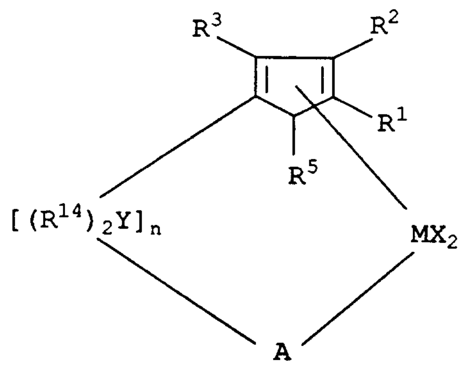

Id

bevorzugt.

Unter der Bezeichnung Metallocene werden also nicht nur die Bis(η-Cyclopentadienyl)-Metall-Komplexe verstanden.

Von den Verbindungen der Formel Ia sind insbesondere diejenigen bevorzugt, in denen

M Titan, Zirkonium oder Hafnium,
X Chlor und
$R^1$ bis $R^5$ Wasserstoff oder $C_1$- bis $C_4$-Alkyl bedeuten.

Von den Verbindungen der Formel Ib sind als bevorzugt diejenigen zu nennen, bei denen

M für Zirkonium oder Hafnium steht,
X für Chlor, $C_1$- bis $C_4$-Alkyl oder Phenyl,
$R^1$ bis $R^5$ Wasserstoff, $C_1$- bis $C_4$-Alkyl oder $Si(R^7)_3$,
$R^8$ bis $R^{12}$ Wasserstoff, $C_1$- bis $C_4$-Alkyl oder $Si(R^{13})_3$ bedeuten.

Insbesondere sind die Verbindungen der Formel Ib geeignet, in denen die Cyclopentadienylreste gleich sind, bevorzugt sind die unsubstituierten Cyclopentadienylreste.

Beispiele für besonders geeignete Verbindungen sind u.a.:
Bis(cyclopentadienyl)zirkoniumdichlorid,
Bis(pentamethylcyclopentadienyl)-zirkoniumdichlorid,
Bis(cyclopentadienyl)-diphenylzirkonium,
Bi(methylcyclopentadienyl)-zirkoniumdichlorid,
Bis(ethylcyclopentadienyl)-zirkoniumdichlorid,
Bis(n-butylpentadienyl)-zirkoniumdichlorid und
Bis(trimethylsilylcyclopentadienyl)-zirkoniumdichlorid sowie
die entsprechenden Dimethylzikoniumverbindungen.

Von denen Verbindungen der Formel Ic sind diejenigen besonders geeignet, in denen

$R^1$ und $R^8$ gleich sind und für Wasserstoff oder $C_1$- bis $C_{10}$-Alkylgruppen stehen,
$R^5$ und $R^{12}$ gleich sind und für Wasserstoff, eine Methyl-, Ethyl-, iso-Propyl- oder tert.-Butylgruppe stehen
$R^2$, $R^3$, $R^9$ und $R^{10}$ die Bedeutung
$R^3$ und $R^{10}$ $C_1$- bis $C_4$-Alkyl
$R^2$ und $R^9$ Wasserstoff
haben oder zwei benachbarte Reste $R^2$ und $R^3$ sowie $R^9$ und $R^{10}$ gemeinsam für 4 bis 12 C-Atome aufweisende cyclische Gruppen stehen,
$R^{14}$ für $C_1$- bis $C_8$-Alkyl,
M für Zirkonium oder Hafnium,
Y für Silicium, Germanium, Zinn oder Kohlenstoff und
X für Chlor stehen.

Beispiele für besonders geeignete Komplexverbindungen sind u.a.
Dimethylsilandiylbis(cyclopentadienyl)-zirkoniumdichlorid,
Dimethylsilandiylbis(idenyl)-zirkoniumdichlorid,
Dimethylsilandiylbis(tetrahydroindenyl)-zirkoniumdichlorid,
Ethylenbis(cyclopentydienyl)-zirkoniumdichlorid,
Ethylenbis(indenyl)-zirkoniumdichlorid,
Ethylenbis(tetrahydroindenyl)-zirkoniumdichlorid,
Dimethylethylen-9-fluorenylcyclopentadienylzirkoniumdichlorid,

Dimethylsilandiylbis(-3-tert.butyl-5-methylcyclopentadienyl)-zirkoniumdichlorid,
Dimethylsilandiylbis(-3-tert.butyl-5-ethylcyclopentadienyl)-zirkoniumdichlorid,
Dimethylsilandiylbis(-3-tert.butyl-5-methylcyclopentadienyl)-dimethylzirkonium,
Dimethylsilandiylbis(-2-methlindenyl)-zirkoniumdichlorid,
Dimethylsilandiylbis(-2-isopropylindenyl)-zirkoniumdichlorid,
Dimethylsilandiylbis(-2-tert.-butylindenyl)-zirkoniumdichlorid,
Diethylsilandiylbis(-2-methlindenyl)-zirkoniumdibromid,
Dimethylsilandiylbis(-2-methyl-5-methylcyclopentadienyl)-zirkoniumdichlorid,
Dimethylsilandiylbis(-2-ethyl-5-isopropylcyclopentadienyl)-zirkoniumdichlorid,
Dimethylsilandiylbis(-2-methylindenyl)-zirkoniumdichlorid,
Dimethylsilandiylbis(-2-methylbenzindenyl)-zirkoniumdichlorid und
Dimethylsilandiylbis(-2-methylindenyl)-hafniumdichlorid.

Bei den Verbindungen der allgemeinen Formel Id sind als besonders geeignet diejenigen zu nennen, in denen

M für Zirkonium oder Hafnium,
X für Chlor oder $C_1$- bis $C_{10}$-Alkyl stehen,
Y für Silicium oder Kohlenstoff steht, wenn n = 1 ist oder für Kohlenstoff, wenn n = 2 ist
$R^{14}$ für $C_1$- bis $C_8$-Alkyl, $C_5$- und $C_6$-Cycloalkyl oder $C_6$- bis $C_{10}$-Aryl,
A für -O-, -S-, $>NR^{15}$

und

$R^1$ bis $R^3$ und $R^5$ für Wasserstoff, $C_1$- bis $C_{10}$-Alkyl, $C_3$- bis $C_{10}$-Cycloalkyl, $C_6$- bis $C_{15}$-Aryl oder $Si(R^7)_3$ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist. Beispiele für entsprechende Herstellungsverfahren sind u.a. im Journal of Organometallic Chemistry, 369 (1989), 359-370 beschrieben.

Als Metallocenkomplex kann auch $\mu$-Oxo-bis(chlorobiscyclopentadienyl)zirkonium verwendet werden.

Die Metallocenkomplexe können auch in kationischer Form vorliegen, wie in der EP-A 277 003 und der EP-A 277 004 beschrieben wird.

In den Stufen a) und c) werden zur Herstellung der erfindungsgemäßen Katalysatorsysteme als oligomere Aluminiumoxidverbindungen bevorzugt offenkettige oder cyclische Alumoxanverbindungen der allgemeinen Formel II oder III

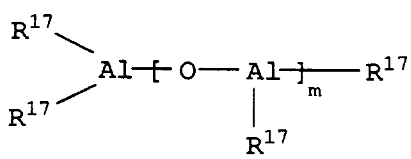

II

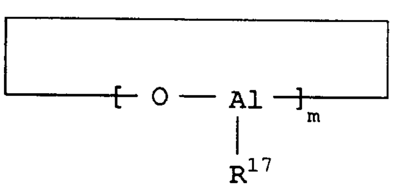

III

wobei

$R^{17}$ eine $C_1$- bis $C_4$-Alkylgruppe, bevorzugt Methyl- oder Ethyl-, bedeutet und m für eine ganze Zahl von 5 bis 30, bevorzugt 10 bis 25, steht,

eingesetzt.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linear als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Die Herstellung der erfindungsgemäßen Katalysatorsysteme erfolgt in einem dreistufigen Verfahren und man erhält vorzugsweise ein geträgertes Katalysatorsystem mit einer Schichtstruktur.

In der Stufe a) wird eine oligomere Aluminiumverbindung zu einem feinteiligen Träger gegeben, der im bevorzugten Fall der Verwendung von Kieselgelen vorzugsweise in einem inerten Lösungsmittel, beispielsweise in Benzol, Toluol, Hexan, Heptan oder deren Mischungen suspendiert ist. Bevorzugt wird auch die oligomere Aluminiumverbindung mit einem inerten Lösungsmittel versetzt, insbesondere mit demjenigen, in dem der Träger suspendiert ist. Üblicherweise rührt man die Mischungen über einen Zeitraum von 10 bis 360 Minuten, bevorzugt 60 bis 180 Minuten bei Temperaturen von 0 bis 100 °C, bevorzugt 30 bis 70 °C.

Das nach der Stufe a) erhaltene Produkt kann gereinigt werden, in dem man beispielsweise mit dem verwendeten inerten Lösungsmittel wäscht und anschließend das Produkt wieder in diesem Lösungsmittel aufnimmt.

In der Stufe b) wird nun hierzu eine Komplexverbindung von Metallen der IV. und V. Nebengruppe des Periodensystems gegeben, die vorzugsweise ebenfalls mit dem in der Stufe a) verwendeten inerten Lösungsmittel versetzt wird. Anschließend wird üblicherweise noch 0,2 bis 8 Stunden, vorzugsweise 2 bis 4 Stunden bei Temperaturen von 0 bis 60 °C, vorzugsweise bei Raumtemperatur gerührt. Als geeignet hat es sich erwiesen, wenn man diese Lösung 1 bis 60 Stunden, bevorzugt 12 bis 18 Stunden bei einer Temperatur von 0 bis 60 °C hält. Das nach der Stufe b) erhaltene Produkt kann wiederum gereinigt werden, beispielsweise ebenso, wie das nach der Stufe a) erhaltene Produkt. Vorzugsweise suspendiert man das gewaschene Produkt in einem hochsiedendem Alkan, beispielsweise Decan.

Anschließend setzt man in der Stufe c) dem nach Stufe b) erhaltenen Produkt eine oligomere Aluminiumoxidverbindung zu, wobei man bevorzugt diejenige verwendet, die schon in Stufe a) eingesetzt wurde. Üblicherweise rührt man hier 1 bis 60 Minuten, bevorzugt 10 bis 30 Minuten bei Temperaturen von 0 bis 120 °C, vorzugsweise bei Raumtemperatur. Danach können die Lösungsmittel durch Verdampfen entfernt werden, so daß ein festes, geträgertes Katalysatorsystem isoliert werden kann.

Das molare Verhältnis zwischen Aluminium aus den oligomeren Aluminiumoxidverbindungen, die in den Stufen a) und c) eingesetzt werden, und dem Metall der IV. und V. Nebengruppe des Periodensystems aus der Komplexverbindung, die in Stufe b) eingesetzt wird, kann im Bereich von 20:1 bis 1000:1 liegen.

Das Verhältnis der Menge an oligomerer Aluminiumoxidverbindung, die in der Stufe a) eingesetzt wird, zu der, die in Stufe c) eingesetzt wird, liegt in der Regel zwischen 0,01:1 bis 100:1, bevorzugt 0,5:1 bis 2:1.

Das Massen Verhältnis von feinteiligem Träger, der in der Stufe a) eingesetzt wird, zu Aluminium aus den oligomeren Aluminiumoxidverbindungen, die in den Stufen a) und c) eingesetzt werden, beträgt in der Regel 2:1 bis 20:1, bevorzugt 5:1 bis 10:1.

Das Massen-Verhältnis von feinteiligem Träger, der in der Stufe a) eingesetzt wird, und oligomeren Aluminiumoxidverbindungen, die in den Stufen a) und c) eingesetzt werden, zu dem Metall der IV. und V. Nebengruppe des Periodensystems aus der Komplexverbindung, die in der Stufe b) eingesetzt wird, liegt üblicherweise im Bereich von 20:1 bis 10 000:1, bevorzugt 50:1 bis 1000:1.

Mit Hilfe dieser Katalysatorsysteme lassen sich Polymerisate von Alkenen herstellen. Darunter werden Homo- und Copolymerisate von $C_2$- bis $C_{10}$-Alkenen, bevorzugt $C_2$- bis $C_{10}$-Alk-1-enen verstanden, wobei als Monomere vorzugsweise Ethylen, Propylen, But-1-en, Pent-1-en und Hex-1-en verwendet werden.

Die Herstellung dieser Polymerisate kann in den üblichen, für die Polymerisation von Alkenen verwendeten Reaktoren entweder diskontinuierlich oder bevorzugt kontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann.

Die Polymerisationsbedingungen sind an sich unkritisch, Drücke von 1 bis 1000 bar, bevorzugt 1 bis 100 bar und Temperaturen von -50 °C bis +300 °C, bevorzugt 0 bis 150 °C haben sich als geeignet erwiesen.

Polymerisationsreaktionen mit Hilfe der erfindungsgemäßen Katalysatorsysteme lassen sich in der Gasphase, in einer Suspension, in flüssigen Monomeren und in inerten Lösungsmitteln durchführen. Bei der Polymerisation in Lösungsmitteln werden insbesondere flüssige Kohlenwasserstoffe wie Benzol oder Toluol verwendet. Polymerisate mit guten anwendungstechnischen Eigenschaften sind auch bei der Polymerisation in der Gasphase, in einer Suspension und in flüssigen Monomeren erhältlich.

Die mittlere Molmasse der gebildeten Polymerisate kann mit den in der Polymerisationstechnik üblichen Methoden gesteuert werden, beispielsweise durch Zufuhr von Reglern wie Wasserstoff, oder durch Veränderung der Reaktionstemperaturen. Durch Senkung der Reaktionstemperatur lassen sich Polymerisate mit

erhöhten mittleren Molmassen herstellen.

Die erfindungsgemäßen Katalysatorsysteme zeichnen sich vor allem durch eine hohe Produktivität aus, die mit Hilfe der erfindungsgemäßen Katalysatorsysteme hergestellten Polymerisate zeigen insbesondere eine gute Morphologie.

Beispiele

Herstellung von geträgerten Katalysatorsystemen

Katalysatorsystem K1

13 g eines Kieselgels mit einer BET-Oberfläche von 320 $m^2$/g, Porenvolumen 1,65 ml/g, sprühgetrocknet (Silica Gel Typ 532, spheroidal der Fa. Grace) wurden bei 180 °C für 5 Stunden im Ölpumpenvakuum getrocknet, dann in 85 ml Toluol suspendiert, mit 40 ml Methylalumoxan als 10 gew.-%ige Toluollösung bei Raumtemperatur versetzt und 2 Stunden bei 50 °C gerührt. Nach dem Erkalten ließ man absetzen, dekantierte die klare, überstehende Toluollösung ab, wusch den Rückstand zweimal mit je 20 ml Toluol und nahm ihn dann in 40 ml Toluol wieder auf. Zu dieser Suspension tropfte man unter Rühren 40 ml einer Lösung von 1,3 g Bis(cyclopentadienyl)zirkoniumdichlorid ($Cp_2ZrCl_2$) in 100 ml Toluol, ließ 4 Stunden rühren und 16 Stunden stehen. Die klare Toluollösung wurde wieder abdekantiert, der Niederschlag mit 40 ml Toluol gewaschen, in 40 ml Decan suspendiert und mit 50 ml Methylalumoxan als 10 gew.-%ige Toluollösung versetzt und 20 Minuten bei Raumtemperatur gerührt. Anschließend wurden die Lösungsmittel bei 100 bis 110 °C im Vakuum abdestilliert und man erhielt ein gut rieselfähiges, gelb bis rosa-beiges Pulver.

Katalysatorsystem K2

Analog dem Katalysatorsystem K1 wurde ein Katalysatorsystem K2 hergestellt, wobei jedoch 40 ml einer Lösung von 1,0 g $Cp_2ZrCl_2$ in 100 ml Toluol eingesetzt wurden.

Katalysatorsystem K3

Es wurde ein Katalysatorsystem K3 analog zu K2 hergestellt, wobei jedoch als Träger ein Kieselgel mit einer BET-Oberfläche von 600 $m^2$/g, Porenvolumen 1,1 ml/g(Silica Gel Typ 360 der Fa. Grace) eingesetzt wurde.

Katalysatorsystem K4

Analog zu K1 wurde ein Katalysatorsystem K4 hergestellt, wobei jedoch als Träger ein Alumlnium-Cogel mit einer BET-Oberfläche von 526 $m^2$/g, Porenvolumen 1,41 ml/g (Aluminium-Cogel Nr. 8 der Fa. Grace) eingesetzt wurde.

Katalysatorsystem K5

Analog zu K4 wurde ein Katalysatorsystem K5 hergestellt, wobei nach Zugabe der $Cp_2ZrCl_2$-Lösung jedoch nur 1 Stunde gerührt wurde und sogleich durch Abdekantieren weitergearbeitet wurde.

Vergleichskatalysatorsysteme VK1, VK3 und VK4

Diese Vergleichskatalysatorstysteme wurden analog den jeweils entsprechenden Katalysatorstystemen K1, K3 und K4 hergestellt, jedoch ohne Suspendieren in Decan und ohne Zusetzen der 50 ml Methylalumoxan als 10 gew.-%ige Toluollösung.

Herstellung von Polyethylen (PE)

Polymerisationsmethode P1

1,7 g Katalysator wurden in 100 ml Heptan suspendiert und 1 Stunde lang bei Normaldruck und Raumtemperatur Ethylen durch die Suspension geleitet.

Polymerisationsmethode P2

Es wurde wie bei P1 gearbeitet, jedoch bei 50 °C polymerisiert.

Polymerisationsmethode P3

In einem 1 l Metall-Autoklaven wurden 2,2 g Katalysator in 500 ml Heptan suspendiert und 1 Stunde lang bei 15 bar und 80 °C Ethylen polymerisisert.

Polymerisationsmethode P4

Es wurde wie bei P3 gearbeitet, jedoch wurde der Katalysator in iso-Butan suspendiert und bei 20 bar und 60 °C polymerisiert.

Polymerisationsmethode P5

In einem 1 l Glasautoklaven wurden 117 mg Katalysator in 400 ml Heptan suspendiert, dem 1 mmol Trimethylaluminium zugesetzt worden war, und 1 Stunde lang bei 10 bar und 80 °C Ethylen polymerisiert.

Polymerisationsmethode P6

Es wurde wie bei P5 gearbeitet, jedoch mit 545 mg Katalysator.

Polymerisationsmethode P7

Es wurde wie bei P5 gearbeitet, jedoch mit 475 mg Katalysator.

Die verwendeten Katalysatorsysteme bei den verschiedenen Polymerisationsmethoden, die Produktivitäten der Katalysatorsysteme sowie Eigenschaften der Polymerisate sind in der Tabelle zusammengestellt.

Der Gewichtsmittelwert $\overline{M}_w$ und der Zahlenmittelwert $\overline{M}_n$ wurden durch Gelpermeationschromatographie bestimmt, die Schüttdichte nach DIN 53 466.

Tabelle

| Bsp. | Katalysatorsystem | Molverhältnis Al:Zr | Polymerisationsmethode | Produktvität [g PE/g Katalysatorsystem·h] | $\overline{M}_w$ [g/mol] | $\overline{M}_w:\overline{M}_n$ | Schüttdichte [g/l] |
|---|---|---|---|---|---|---|---|
| 1 | K1 | 92:1 | P1 | 4,6 | 371000 | 11,7 | - |
| 2 | K2 | 64:1 | P3 | 58,0 | 462000 | 3,0 | 382 |
| 3 | K2 | 64:1 | P4 | 35,0 | 435000 | 4,7 | 432 |
| 4 | K2 | 64:1 | P5 | 233,0 | 318000 | 5,11 | - |
| 5 | K3 | 57:1 | P1 | 2,8 | 466000 | 11,2 | - |
| 6 | K4 | 86:1 | P2 | 3,7 | - | - | - |
| 7 | K4 | 86:1 | P6 | 63,1 | 176000 | 5,26 | - |
| 8 | K5 | 58:1 | P7 | 86,3 | 205000 | 3,43 | - |
| V1 | VK1 | 17:1 | P1 | 1,1 | - | - | - |
| V2 | VK1 | 17:1 | P3 | 7,8 | 382000 | 3,4 | 418 |
| V3 | VK3 | 13:1 | P1 | 0,9 | - | - | - |
| V4 | VK4 | 30:1 | P2 | 0,7 | - | - | - |

## Patentansprüche

**1.** Katalysatorsysteme zur Polymerisation von $C_2$- bis $C_{10}$-Alkenen, erhältlich durch

a) Zugabe einer oligomeren Aluminiumoxidverbindung zu einem feinteiligen Träger,

b) anschließende Zugabe einer Komplexverbindung von Metallen der IV. und V. Nebengruppe des Periodensystems zu dem nach Stufe a) erhaltenen Produkt
und
c) anschließende Zugabe einer oligomeren Aluminiumoxidverbindung zu dem nach Stufe b) erhaltenen Produkt.

**2.** Katalysatorsysteme nach Anspruch 1, dadurch gekennzeichnet, daß der, in der Stufe a) verwendete feinteilige Träger einen Teilchendurchmesser im Bereich von 1 bis 200 µm hat.

**3.** Katalysatorsysteme nach den Ansprüchen 1 bis 2, dadurch gekennzeichnet, daß als feinteiliger Träger in der Stufe a) Kieselgele eingesetzt werden.

**4.** Katalysatorsysteme nach den Ansprüchen 1 bis 3, dadurch gekennzeichnet, daß als Komplexverbindung von Metallen der IV. und V. Nebengruppe des Periodensystems in der Stufe b) ein Metallocenkomplex der allgemeinen Formel I

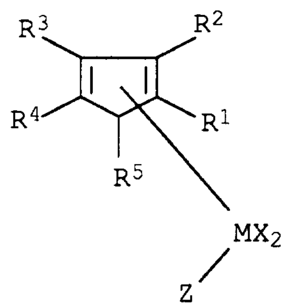

I

in der die Substituenten folgende Bedeutung haben:

M Titan, Zirkonium, Hafnium, Vanadium, Niob oder Tantal,

X Fluor, Chlor, Brom, Iod, Wasserstoff, $C_1$- bis $C_{10}$-Alkyl, $C_6$- bis $C_{15}$-Aryl oder $-OR^6$,

wobei

$R^6$ $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,

$R^1$ bis $R^5$ Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende cyclische Gruppen stehen können, oder $Si(R^7)_3$ mit

$R^7$ $C_1$- bis $C_{10}$-Alkyl, $C_6$- bis $C_{15}$-Aryl oder $C_3$- bis $C_{10}$-Cycloalkyl,

Z für X oder

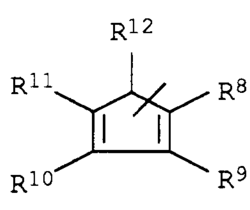

steht,

wobei die Reste $R^8$ bis $R^{12}$ Wasserstoff, $C_1$- bis $C_{10}$-Alkyl, 5- bis 7-gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 15 C-Atome aufweisende cyclische Gruppen stehen können, oder $Si(R^{13})_3$ mit

$R^{13}$ $C_1$- bis $C_{10}$-Alkyl, $C_6$- bis $C_{15}$-Aryl oder $C_3$- bis $C_{10}$-Cycloalkyl,

oder wobei die Reste $R^4$ und Z gemeinsam eine Gruppierung $[Y(R^{14})_2]_n$-E- bilden, in der

Y für Silicium, Germanium, Zinn oder Kohlenstoff steht,
$R^{14}$ für $C_1$- bis $C_{10}$-Alkyl, $C_3$- bis $C_{10}$-Cycloalkyl oder $C_6$- bis $C_{15}$-Aryl
n für die Zahlen 1, 2, 3 oder 4
E für

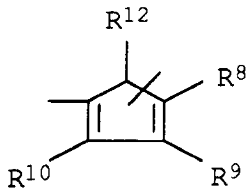

oder A steht, wobei
A -O-, -S-, $>NR^{15}$
oder $>PR^{15}$ bedeutet,
mit
$R^{15}$ $C_1$- bis $C_{10}$-Alkyl, $C_6$- bis $C_{15}$-Aryl, $C_3$- bis $C_{10}$-Cycloalkyl, Alkylaryl oder $Si(R^{16})_3$
mit
$R^{16}$ $C_1$- bis $C_{10}$-Alkyl, $C_6$- bis $C_{15}$-Aryl, $C_3$- bis $C_{10}$-Cycloalkyl oder Alkylaryl
eingesetzt wird.

5. Katalysatorsysteme nach den Ansprüchen 1 bis 4, dadurch gekennzeichnet, daß als oligomere Aluminiumoxidverbindungen in den Stufen a) und c) offenkettige oder cyclische Alumoxanverbindung der allgemeinen Formel II oder III

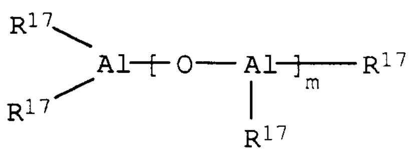 II

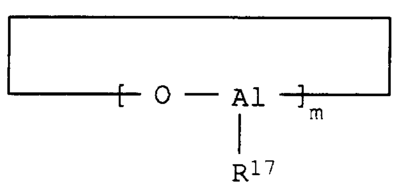 III

wobei
$R^{17}$ eine $C_1$- bis $C_4$-Alkylgruppe bedeutet und m für eine ganze Zahl von 5 bis 30 steht,
eingesetzt werden.

6. Verfahren zur Herstellung von Katalysatorsystemen gemäß den Verfahrensbedingungen von Anspruch 1.

7. Verwendung der Katalysatorsysteme gemäß den Ansprüchen 1 bis 5 zur Herstellung von Polyalkenen.

8. Verfahren zur Herstellung von Polymerisaten von $C_2$- bis $C_{10}$-Alkenen bei Drücken von 1 bis 1000 bar und Temperaturen von -50 bis +300 °C mit Hilfe eines Katalysatorsystems, dadurch gekennzeichnet, daß man Katalysatorsysteme gemäß den Ansprüchen 1 bis 5 verwendet.

**9.** Polymerisate von $C_2$- bis $C_{10}$-Alkenen, erhältlich nach dem Verfahren gemäß Anspruch 8.

Europäisches Patentamt

# EUROPÄISCHER RECHERCHENBERICHT

Nummer der Anmeldung

EP 92 11 9692

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| D,X | EP-A-0 285 443 (MITSUI PETROCHEMICAL INDUSTRIES)<br>* Ansprüche 1-10,15 *<br>* Seite 8, Zeile 29 *<br>* Seite 9, Zeile 2 - Zeile 40 *<br>* Beispiel 5 *<br>--- | 1-9 | C08F10/00<br>C08F4/622 |
| X | EP-A-0 313 386 (MITSUBISHI PETROCHEMICAL COMPANY)<br>* Ansprüche 1,4 *<br>* Seite 3, Zeile 16 - Seite 5, Zeile 18 *<br>--- | 1-9 | |
| P,X | WO-A-9 205 203 (EXXON CHEMICALS PATENTS INC.)<br>* Ansprüche 1,4-7 *<br>* Seite 18, Zeile 26 - Seite 19, Zeile 35 *<br>--- | 1-9 | |
| A | PATENT ABSTRACTS OF JAPAN<br>vol. 12, no. 270 (C-515)(3117) 27. Juli 1988<br>& JP-A-63 51 407 ( MITSUI PETROCHEMICAL INDUSTRIES ) 4. März 1988<br>* Zusammenfassung *<br>----- | | RECHERCHIERTE SACHGEBIETE (Int. Cl.5 )<br>C08F |

Der vorliegende Recherchenbericht wurde für alle Patentansprüche erstellt

| Recherchenort | Abschlußdatum der Recherche | Prüfer |
|---|---|---|
| DEN HAAG | 15 FEBRUAR 1993 | FISCHER B.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)